(19) Europäisches Patentamt / European Patent Office / Office européen des brevets

(11) **EP 4 282 917 B1**

(12) **EUROPEAN PATENT SPECIFICATION**

(45) Date of publication and mention
of the grant of the patent:
**10.09.2025 Bulletin 2025/37**

(21) Application number: **21921292.5**

(22) Date of filing: **16.12.2021**

(51) International Patent Classification (IPC):
**C08K 9/02** (2006.01)     **C08K 3/36** (2006.01)
**C08L 33/12** (2006.01)

(52) Cooperative Patent Classification (CPC):
(C-Sets available)
**C08K 9/02; C08K 3/36; C08K 2003/2241;
C08K 2201/003**              (Cont.)

(86) International application number:
**PCT/JP2021/046601**

(87) International publication number:
**WO 2022/158190 (28.07.2022 Gazette 2022/30)**

(54) **METHACRYLIC RESIN COMPOSITION**

METHACRYLHARZZUSAMMENSETZUNG

COMPOSITION DE RÉSINE MÉTHACRYLIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **20.01.2021   JP 2021007319**

(43) Date of publication of application:
**29.11.2023   Bulletin 2023/48**

(73) Proprietor: **SUMITOMO CHEMICAL COMPANY,
LIMITED**
**Tokyo 103-6020 (JP)**

(72) Inventor: **KONISHI, Shota**
**Niihama-shi, Ehime 792-8521 (JP)**

(74) Representative: **Winter, Brandl - Partnerschaft
mbB**
**Alois-Steinecker-Straße 22**
**85354 Freising (DE)**

(56) References cited:
**WO-A1-2020/022339        WO-A1-2020/022341
WO-A1-2020/250813        JP-A- 2006 052 128
JP-A- H0 665 475            US-A1- 2012 121 804**

(52) Cooperative Patent Classification (CPC): (Cont.)

C-Sets
**C08K 9/02, C08L 33/12**

**Description**

TECHNICAL FIELD

The present invention relates to a methacrylic resin composition and a molded article thereof.

BACKGROUND ART

For the purpose of improving transparency and scratch resistance of a lamp cover for a vehicle, an aspect is known in which a thermoplastic resin (methacrylic resin) and silica composite oxide particles are blended in a resin composition which is a material of the lamp cover (See Patent Documents 1 and 2).

PRIOR ART DOCUMENT

PATENT DOCUMENT

    Patent Document 1: WO-A-2020/022339
    Patent Document 2: WO-A-2020/022341

SUMMARY OF INVENTION

PROBLEMS TO BE SOLVED BY THE INVENTION

According to the resin composition disclosed in Patent Document 1, although transparency and scratch resistance of the lamp cover can be improved to improve a balance therebetween, there is room for further improvement in achieving both the transparency and the scratch resistance.

MEANS FOR SOLVING THE PROBLEMS

As a result of intensive studies to solve the above problem, the present inventors have found that the above problem can be solved by inclusion of predetermined particles in a resin composition, and have completed the present invention.
The invention is defined in the claims.

EFFECT OF THE INVENTION

When the methacrylic resin composition according to the present invention is used as a material of a lamp cover particularly for a vehicle, the methacrylic resin composition can further improve transparency and scratch resistance of the lamp cover and can further improve a balance between the transparency and the scratch resistance.

MODE FOR CARRYING OUT THE INVENTION

Hereinafter, an embodiment of the present invention will be specifically described.

1. Methacrylic resin composition

A methacrylic resin composition of the present embodiment contains a methacrylic resin and coated particles in which silica composite oxide particles are coated with silica. Hereinafter, a specific description will be given.

(1) Methacrylic resin

The methacrylic resin contained in the methacrylic resin composition of the present embodiment is a polymer having a monomer unit derived from a monomer having a methacrylic group.
Examples of the methacrylic resin include a methacrylic homopolymer containing only a monomer unit derived from an alkyl methacrylate having an alkyl group having 1 to 4 carbon atoms, and a methacrylic copolymer containing 85% by mass or more and less than 100% by mass of monomer units derived from an alkyl methacrylate having an alkyl group having 1 to 4 carbon atoms and more than 0% by mass and 15% by mass or less of monomer units derived from a vinyl monomer copolymerizable with an alkyl methacrylate having an alkyl group having 1 to 4 carbon atoms.

Here, the "alkyl methacrylate having an alkyl group having 1 to 4 carbon atoms" is a compound represented by $CH_2=CH(CH_3)COOR$ (R is an alkyl group having 1 to 4 carbon atoms). The "vinyl monomer copolymerizable with an alkyl methacrylate having an alkyl group having 1 to 4 carbon atoms" is a monomer copolymerizable with an alkyl methacrylate having an alkyl group having 1 to 4 carbon atoms and having a vinyl group.

Examples of the alkyl methacrylate having an alkyl group having 1 to 4 carbon atoms include methyl methacrylate, ethyl methacrylate, n-propyl methacrylate, isopropyl methacrylate, n-butyl methacrylate, tert-butyl methacrylate, sec-butyl methacrylate, and isobutyl methacrylate. The alkyl methacrylate having an alkyl group having 1 to 4 carbon atoms is preferably methyl methacrylate. The alkyl methacrylate may be used singly or in combination of two or more types thereof.

Examples of the vinyl monomer copolymerizable with an alkyl methacrylate having an alkyl group having 1 to 4 carbon atoms include: a methacrylate such as cyclohexyl methacrylate, benzyl methacrylate, 2-ethylhexyl methacrylate, 2-hydroxyethyl methacrylate, hydroxypropyl methacrylate, or monoglycerol methacrylate (provided that an alkyl methacrylate having an alkyl group having 1 to 4 carbon atoms is excluded); an acrylate such as methyl acrylate, ethyl acrylate, propyl acrylate, butyl acrylate, 2-ethylhexyl acrylate, 2-hydroxyethyl acrylate, 2-hydroxypropyl acrylate, or monoglycerol acrylate; an unsaturated carboxylic acid or an acid anhydride thereof such as acrylic acid, methacrylic acid, maleic acid, itaconic acid, maleic anhydride, or itaconic anhydride; a nitrogen-containing monomer such as acrylamide, methacrylamide, acrylonitrile, methacrylonitrile, diacetone acrylamide, or dimethylaminoethyl methacrylate; an epoxy group-containing monomer such as allyl glycidyl ether, glycidyl acrylate, or glycidyl methacrylate; and a styrene-based monomer such as styrene or $\alpha$-methylstyrene.

In the present embodiment, the alkyl methacrylate is preferably methyl methacrylate, and the methacrylic resin composition of the present embodiment preferably contains 85% by mass or more of monomer units derived from methyl methacrylate.

In the present embodiment, a difference between a refractive index of the methacrylic resin and a refractive index of the coated particles at the time of irradiation with a light beam having a wavelength of 589 nm at 25°C is preferably 0.03 or less, more preferably 0.02 or less, and still more preferably 0.01 or less. The refractive index of the methacrylic resin is particularly preferably the same as that of the coated particles. When the difference in refractive index between the methacrylic resin and the coated particles is further reduced, particularly 0.03 or less, transparency of a molded article can be further improved, and furthermore, a molded article excellent in both transparency and scratch resistance can be obtained.

The refractive index of the methacrylic resin can be measured by any suitable conventionally known measurement method such as a critical angle method, a V block method, or an immersion method.

Examples of a method for manufacturing the methacrylic resin include a method for polymerizing an alkyl methacrylate having an alkyl group having 1 to 4 carbon atoms and, if necessary, a vinyl monomer copolymerizable with the alkyl methacrylate having an alkyl group having 1 to 4 carbon atoms as monomer components by a bulk polymerization method, a solution polymerization method, a suspension polymerization method, an emulsion polymerization method, or the like, and the bulk polymerization method is preferable.

By the bulk polymerization method, a methacrylic resin having a better appearance can be obtained because a polymerization stabilizer is not used. In addition, unlike a case of suspension polymerization, a polymerization temperature is higher than 100°C, and as a result, syndiotacticity of the methacrylic resin is easily reduced, and therefore fluidity of the methacrylic resin is further increased. When bulk polymerization is continuously performed, for example, the bulk polymerization can be performed by continuously extracting a partial polymer obtained by continuously supplying the above monomer components and, if necessary, a polymerization initiator, a chain transfer agent, and the like into a reaction vessel and retaining the monomer components and the like in the reaction vessel for a predetermined time, and therefore the methacrylic resin can be efficiently polymerized and manufactured.

In manufacture of the methacrylic resin contained in the methacrylic resin composition of the present invention by the bulk polymerization method, the polymerization temperature is preferably 110 to 190°C.

In the above method for manufacturing the methacrylic resin, for example, additives such as a polymerization initiator and a chain transfer agent may be used. As the polymerization initiator, for example, a radical initiator can be used.

Examples of the radical initiator include: an azo compound such as azobisisobutyronitrile, azobisdimethylvaleronitrile, azobiscyclohexanenitrile, 1,1'-azobis(1-acetoxy-1-phenylethane), dimethyl 2,2'-azobisisobutyrate, or 4,4'-azobis-4-cyanovaleric acid; and an organic peroxide such as benzoyl peroxide, lauroyl peroxide, acetyl peroxide, caprylyl peroxide, 2,4-dichlorobenzoyl peroxide, isobutyl peroxide, acetylcyclohexylsulfonyl peroxide, tert-butyl peroxypivalate, tert-butyl peroxineodecanoate, tert-butyl peroxineoheptanoate, tert-butyl peroxy-2-ethylhexanoate, 1,1-di(tert-butylperoxy) cyclohexane, 1,1-di(tert-butylperoxy)-3,3,5-trimethylcyclohexane, 1,1-di(tert-hexylperoxy)-3,3,5-trimethylcyclohexane, diisopropylperoxydicarbonate, diisobutylperoxydicarbonate, di-sec-butylperoxydicarbonate, di-n-butylperoxydicarbonate, bis(2-ethylhexyl) peroxydicarbonate, bis(4-tert-butylcyclohexyl) peroxydicarbonate, tert-amylperoxy-2-ethylhexanoate, 1,1,3,3-tetramethylbutylperoxy-ethylhexanoate, 1,1,2-trimethylpropylperoxy-2-ethylhexanoate, tert-butylperoxyisopropyl monocarbonate, tert-amylperoxyisopropyl monocarbonate, tert-butylperoxy-2-ethylhexyl carbonate, tert-butylperoxyallyl carbonate, tert-butylperoxyisopropyl carbonate, 1,1,3,3-tetramethylbutylperoxyisopropyl monocarbonate, 1,1,2-trimethylpropylperoxyisopropyl monocarbonate, 1,1,3,3-tetramethylbutylperoxy isononanoate, 1,1,2-trimethylpropyl peroxy-isononanoate, or tert-butyl peroxybenzoate.

The polymerization initiator may be used singly or in combination of two or more types thereof.

The polymerization initiator can be selected according to the type of a methacrylic resin to be synthesized or a raw material monomer to be used. The radical initiator is preferably a polymerization initiator having a half-life of one minute or less at a polymerization temperature.

In the present embodiment, the chain transfer agent may be either a monofunctional chain transfer agent or a polyfunctional chain transfer agent. Specific examples of the chain transfer agent include: an alkyl mercaptan such as n-propyl mercaptan, isopropyl mercaptan, n-butyl mercaptan, tert-butyl mercaptan, n-hexyl mercaptan, n-octyl mercaptan, 2-ethylhexyl mercaptan, n-dodecyl mercaptan, or tert-dodecyl mercaptan; an aromatic mercaptan such as phenyl mercaptan or thiocresol; a mercaptan having 18 or less carbon atoms, such as ethylene thioglycol; a polyhydric alcohol such as ethylene glycol, neopentyl glycol, trimethylolpropane, pentaerythritol, dipentaerythritol, tripentaerythritol, or sorbitol; a compound obtained by esterifying a hydroxy group with thioglycolic acid or 3-mercaptopropionic acid; 1,4-dihydronaphthalene; 1,4,5,8-tetrahydronaphthalene; β-terpinene; terpinolene; 1,4-cyclohexadiene; and hydrogen sulfide. The chain transfer agent may be used singly or in combination of two or more types thereof.

The type and use amount of the chain transfer agent can be appropriately selected according to the type and the like of a methacrylic resin to be synthesized or a monomer component to be used. The chain transfer agent is preferably n-octyl mercaptan or n-dodecyl mercaptan.

In addition to the monomer components, the polymerization initiator, the chain transfer agent, and the like, for example, a release agent, a rubber-like polymer such as butadiene or a styrene-butadiene rubber (SBR), a heat stabilizer, an ultraviolet absorber, and the like may be used.

Here, the release agent is a component used for improving moldability of the methacrylic resin composition. The heat stabilizer is a component used for suppressing thermal decomposition of the methacrylic resin. The ultraviolet absorber is a component used for suppressing deterioration of the methacrylic resin due to ultraviolet rays.

In the present embodiment, the release agent is not particularly limited. Examples of the release agent include a higher fatty acid ester, a higher aliphatic alcohol, a higher fatty acid, a higher fatty acid amide, and a higher fatty acid metal salt. Note that the release agent may be used singly or in combination of two or more types thereof.

The use amount of the release agent is preferably 0.01 to 1.0 parts by mass, and more preferably 0.01 to 0.50 parts by mass with respect to 100 parts by mass of the methacrylic resin. Note that when the methacrylic resin composition of the present invention contains two or more types of methacrylic resins, the "100 parts by mass of methacrylic resin" refers to the total amount of the two or more types of methacrylic resins.

In the present embodiment, the heat stabilizer is not particularly limited. Examples of the heat stabilizer include a hindered phenol-based heat stabilizer, a phosphorus-based heat stabilizer, and an organic disulfide compound. Among these compounds, an organic disulfide compound is preferable. Note that the heat stabilizer may be used singly or in combination of two or more types thereof.

The use amount of the heat stabilizer is preferably 1 to 2000 ppm by mass with respect to 100 parts by mass of the methacrylic resin. When the methacrylic resin composition (more specifically, methacrylic resin composition after devolatilization) is molded in order to manufacture a molded article from the methacrylic resin composition, a molding temperature may be set to be high for the purpose of improving molding efficiency. In such a case, when the heat stabilizer is blended, the resin composition can be more effectively molded.

Examples of the ultraviolet absorber include a benzophenone-based ultraviolet absorber, a cyanoacrylate-based ultraviolet absorber, a benzotriazole-based ultraviolet absorber, a malonate-based ultraviolet absorber, and an oxalanilide-based ultraviolet absorber. The ultraviolet absorber may be used singly or in combination of two or more types thereof. Among these compounds, a benzotriazole-based ultraviolet absorber, a malonate-based ultraviolet absorber, and an oxalanilide-based ultraviolet absorber are preferable.

The use amount of the ultraviolet absorber is preferably 5 to 1000 ppm by mass with respect to 100 parts by mass of the methacrylic resin contained in the methacrylic resin composition.

(2) Coated particles

The methacrylic resin composition of the present embodiment contains coated particles in which silica composite oxide particles are coated with silica.

The "silica composite oxide particle" is a particulate body that can be a core of the "coated particle" of the present embodiment. Here, the "silica composite oxide" refers to an oxide in which a part of a silicon (Si) element in silica is replaced with another element, in other words, an oxide in which silicon and another element form a uniform structure together.

The structure of the silica composite oxide can be analyzed by transmission electron microscope-energy dispersive X-ray spectrometry (TEM-EDX), an X-ray absorption fine structure (XAFS) spectrum, or the like.

The "other element" is not particularly limited as long as it is an element other than silicon and oxygen and can form an oxide particle having a uniform structure together with silicon.

Examples of the "other element" include elements of Groups 2 to 14 of the periodic table. The "other element" is preferably titanium, zirconium, aluminum, zinc, chromium, manganese, magnesium, cerium, boron, iron, indium, or tin. The "other element" is more preferably titanium, zirconium, or aluminum, and still more preferably titanium.

Specific examples of the silica composite oxide particle include a silica-titania composite oxide particle, a silica-zirconia composite oxide particle, and a silica-alumina composite oxide particle.

The silica composite oxide particle is preferably a silica-titania composite oxide particle or a silica-zirconia composite oxide particle, and more preferably the silica-titania composite oxide particle.

In the present embodiment, the shape of the silica composite oxide particle is not particularly limited. The silica composite oxide particle may have, for example, a substantially spherical shape, a rectangular parallelepiped shape, or a pulverized shape having a plurality of corners. The shape of the silica composite oxide particle is preferably a substantially spherical shape, and more preferably a truly spherical shape.

In the present embodiment, the silica composite oxide particles have an average primary particle diameter of usually 0.1 $\mu$m or more and 2.0 $\mu$m or less, preferably 0.2 $\mu$m or more and 2.0 $\mu$m or less, more preferably 0.3 $\mu$m or more and 2.0 $\mu$m or less, still more preferably 0.4 $\mu$m or more and 2.0 $\mu$m or less.

Here, the average primary particle diameter of the silica composite oxide particles can be measured, for example, by reading particle diameters from an observation image of the particles with a scanning electron microscope. When the average primary particle diameter of the silica composite oxide particles is within the above range, a molded article excellent in both scratch resistance and transparency can be manufactured. Here, the primary particle means a particle to be a minimum unit constituting the silica composite oxide particle.

The silica composite oxide particles have an average particle diameter (diameter) of usually 0.1 $\mu$m or more and 2.0 $\mu$m or less, preferably 0.2 $\mu$m or more and 2.0 $\mu$m or less, more preferably 0.3 $\mu$m or more and 2.0 $\mu$m or less, still more preferably 0.4 $\mu$m or more and 2.0 $\mu$m or less.

The average particle diameter of the silica composite oxide particles can be measured by, for example, a laser diffraction scattering method. By setting the average particle diameter of the silica composite oxide particles within the above range, both scratch resistance and transparency of a molded article obtained by molding the methacrylic resin composition of the present embodiment can be improved.

In the present specification, the average particle diameter means a median diameter (d50) (hereinafter, referred to as a median diameter).

In the present embodiment, the silica composite oxide particles have a refractive index (refractive index when the silica composite oxide particles are irradiated with a light beam having a wavelength of 589 nm at 25°C) of preferably 1.47 or more and 1.60 or less, more preferably 1.47 or more and 1.52 or less, still more preferably 1.47 or more and 1.50 or less.

The refractive index of the silica composite oxide particles can be adjusted to any suitable refractive index by changing a composition ratio between silicon and another element in the silica composite oxide particles.

Note that the refractive index of the silica composite oxide particles can be measured by any suitable conventionally known method such as an immersion method.

When the refractive index of the silica composite oxide particles is within the above range, transparency of a molded article obtained by molding the methacrylic resin composition of the present embodiment can be further enhanced.

The silica composite oxide particles can be manufactured by any suitable conventionally known manufacturing method such as a flame melting method, a flame hydrolysis method, or a sol-gel method.

The coated particle of the present embodiment has a form in which a surface of the silica composite oxide particle described above is coated with silica.

Here, the "coated" includes not only an aspect in which the entire surface of the silica composite oxide particle is completely coated with silica but also an aspect in which only a part of the surface of the silica composite oxide particle is coated with silica.

The thickness of a layer constituted by silica (hereinafter, referred to as a surface silica layer) that can constitute the surface of the coated particle of the present embodiment is not particularly limited.

The thickness of the surface silica layer can be adjusted to any suitable thickness in consideration of a balance between transparency and scratch resistance of a molded article obtained by molding the methacrylic resin composition of the present embodiment.

The thickness of the surface silica layer is, for example, preferably 1 nm to 30 nm, and more preferably 3 nm to 15 nm.

The thickness of the surface silica layer can be adjusted, for example, by adjusting a ratio between the amount of raw materials of the surface silica layer and a specific surface area of the silica composite oxide particles.

In addition, the thickness of the surface silica layer can be determined, for example, by calculation based on a charge composition ratio of the raw materials, and can also be determined by observation with a transmission electron microscope.

Here, the observation with a transmission electron microscope can be performed by embedding the coated particles of the present embodiment, for example, in an acrylic resin or an epoxy resin, and then polishing the coated particles by any suitable conventionally known polishing method to expose cross sections of the coated particles.

The coated particles have a median diameter (diameter) of usually 0.1 μm or more and 2.0 μm or less (0.1 μm to 2.0 μm), preferably 0.2 μm or more and 2.0 μm or less (0.2 μm to 2.0 μm), more preferably 0.3 μm or more and 2.0 μm or less (0.3 μm to 2.0 μm), still more preferably 0.4 μm or more and 2.0 μm or less (0.4 μm to 2.0 μm).

The median diameter of the coated particles can be measured by, for example, a laser diffraction scattering method.

By setting the median diameter of the coated particles within the above range, both scratch resistance and transparency of a molded article obtained by molding the methacrylic resin composition of the present embodiment can be improved.

In the present embodiment, the coated particles have a refractive index (refractive index when the coated particles are irradiated with a light beam having a wavelength of 589 nm at 25°C) of preferably 1.470 or more and 1.600 or less (1.470 to 1.600), more preferably 1.474 or more and 1.520 or less (1.474 to 1.520), still more preferably 1.474 or more and 1.494 or less (1.474 to 1.494).

The refractive index of the coated particles can be measured by any suitable conventionally known method, for example, an immersion method using a light beam (sodium D beam) having a wavelength of 589.3 nm.

When the refractive index of the coated particles is within the above range, transparency of a molded article obtained by molding the methacrylic resin composition of the present embodiment can be further enhanced.

In the present embodiment, the coated particles in which surfaces of the silica composite oxide particles are coated with silica can be manufactured, for example, by a method in which tetraethyl silicate is added dropwise to a liquid obtained by dispersing the silica composite oxide particles in an alkaline alcohol solution, and a hydrolyzate of tetraethyl silicate is precipitated on the surfaces of the silica composite oxide particles.

The coated particles thus manufactured are further heat-treated (calcined) in order to remove moisture, an organic substance, and the like contained in the particles. A temperature of the heat treatment is not particularly limited. The temperature of the heat treatment is preferably 900°C to 1200°C, and more preferably 950°C to 1100°C from a viewpoint of suppressing sintering of the particles to improve monodispersibility. Time required for the heat treatment is not particularly limited. The time for the heat treatment is preferably 30 minutes to 10 hours.

When silica particles having a median diameter of 1 μm or less, for example, are heat-treated at a temperature of 1000°C or higher, the particles may be sintered to deteriorate monodispersibility of the particles. However, when the surfaces of the silica composite oxide particles are coated with chemically inert silica as in the coated particles of the present embodiment, monodispersibility of the particles can be favorable even when heat treatment is performed at a temperature of 1000°C or higher.

The content of the coated particles contained in the methacrylic resin composition of the present embodiment is preferably 0.001 parts by mass or more and 5 parts by mass or less (0.001 parts by mass to 5 parts by mass), more preferably 0.01 parts by mass or more and 5 parts by mass or less (0.01 parts by mass to 5 parts by mass), still more preferably 0.01 parts by mass or more and 1 part by mass or less (0.01 parts by mass to 1 part by mass), and particularly preferably 0.03 parts by mass or more and 0.45 parts by mass or less (0.03 parts by mass to 0.45 parts by mass) with respect to 100 parts by mass of the methacrylic resin. The content of the coated particles in the methacrylic resin composition can be measured using, for example, an ICP-AES method.

In addition, the content may be a blending concentration of the coated particles when the methacrylic resin and the coated particles are melt-kneaded. A value of the blending concentration and a value of the content are substantially the same. The content of the coated particles is preferably measured by an ICP-AES method from a viewpoint of accuracy.

By setting the content of the coated particles to 0.001 parts by mass or more, a molded article obtained by molding a methacrylic resin composition, having high scratch resistance can be obtained. In addition, by setting the content of the coated particles to 5 parts by mass or less, a molded article having high transparency can be obtained.

By setting the content of the coated particles within the above range, both scratch resistance and transparency of a molded article obtained by molding the methacrylic resin composition of the present embodiment can be improved, and furthermore, water resistance can be improved.

(3) Other components

The methacrylic resin composition of the present embodiment may further contain other components, if necessary, in addition to the methacrylic resin and the coated particles described above. Examples of the other components include an ultraviolet absorber, an antioxidant, a release agent, an antistatic agent, and a flame retardant.

Examples of the ultraviolet absorber include a benzophenone-based ultraviolet absorber, a cyanoacrylate-based ultraviolet absorber, a benzotriazole-based ultraviolet absorber, a malonate-based ultraviolet absorber, and an oxalanilide-based ultraviolet absorber.

Examples of the antioxidant include a phenol-based antioxidant, a sulfur-based antioxidant, and a phosphorus-based antioxidant.

Examples of the release agent include a higher fatty acid ester, a higher aliphatic alcohol, a higher fatty acid, a higher fatty acid amide, a higher fatty acid metal salt, and a fatty acid derivative.

Examples of the antistatic agent include conductive inorganic particles, a tertiary amine, a quaternary ammonium salt, a cationic acrylic acid ester derivative, and a cationic vinyl ether derivative.

Examples of the flame retardant include a cyclic nitrogen compound, a phosphorus-based flame retardant, a silicon-based flame retardant, a cage-like silsesquioxane or a partially cleaved structure thereof, and a silica-based flame retardant.

## 2. Method for manufacturing methacrylic resin composition

Examples of a method for manufacturing the methacrylic resin composition of the present embodiment include a method in which the methacrylic resin, the coated particles, and if necessary, the other components (an ultraviolet absorber, an antioxidant, a release agent, an antistatic agent, a flame retardant, and the like) are kneaded by any suitable conventionally known method. In the present embodiment, conditions for kneading are not particularly limited. The conditions for the kneading can be any suitable conditions in consideration of selected components, the amounts and properties thereof, and the like.

Specifically, the methacrylic resin composition of the present embodiment can be manufactured by adding a predetermined amount of coated particles and the other components selected if necessary to 100 parts by mass of a prepared methacrylic resin, mixing the mixture, and then melt-kneading the mixture using any suitable conventionally known extruder (for example, a twin screw extruder).

As conditions for melt-kneading, for example, a temperature between a raw material input port and an outlet of the extruder can be set to 200°C to 270°C.

After the mixture is melt-kneaded as described above, for example, the mixture is extruded from the extruder into a strand shape, cooled with water to be solidified, and cut to a desired length with a strand cutter, whereby a pellet-shaped methacrylic resin composition can be obtained.

## 3. Molded article

The methacrylic resin composition of the present embodiment can be formed into a molded article having any shape by being molded by any suitable conventionally known molding method (A method for manufacturing the molded article will be described later.). That is, the molded article of the present embodiment contains the methacrylic resin composition described above.

In the present embodiment, the shape of the molded article and the size of the molded article, such as the thickness thereof are not particularly limited. The thickness of the molded article is preferably 0.5 mm or more and 8 mm or less, more preferably 1 mm or more and 6 mm or less, and still more preferably 1 mm or more and 4 mm or less. By setting the thickness of the molded article within the above range, a molded article excellent in transparency can be obtained.

In addition, a layer constituting a laminate can be formed using the methacrylic resin composition of the present embodiment. That is, the molded article of the present embodiment includes a laminate including a layer containing the methacrylic resin composition described above.

The molded article of the present embodiment having a width of 75 mm, a length of 90 mm, and a thickness of 3 mm, obtained by molding a methacrylic resin composition containing a methacrylic resin and inorganic particles satisfies the following formulae (1) to (3):

$$Haze^0 < 4 \quad (1)$$

$$Haze^7 < 4 \quad (2)$$

$$Haze^{25}/Haze^7 < 3.2 \quad (3)$$

In the formulae (1) to (3),

$Haze^0$ represents a haze (%) when the molded article is brought into an absolute dry state,
$Haze^7$ represents a haze (%) after the molded article is brought into an absolute dry state and then immersed in pure water at 80°C for seven days, and
Haze[25] represents a haze (%) after the molded article is brought into an absolute dry state and then immersed in pure water at 80°C for 25 days.

Here, the "inorganic particles" can include particles containing an inorganic material that satisfies the above requirements, in addition to the coated particles described above.

The absolute dry state refers to a state in which a molded article is dried by being allowed to stand in an environment at a temperature of 80°C and a pressure of 100 mmHg or less for 120 hours or more, the amount of change in weight of the molded article is less than 0.05% as compared with the weight thereof 120 hours ago, and the amount of change in haze of the molded article is less than 5% of the haze thereof 120 hours ago.

(1) Haze and method for measuring haze

In the present embodiment, a haze of the molded article can be measured according to JIS K 7136 (ISO14782, corresponding to Plastics-Determination of haze for transparent materials) applicable to a subject having a haze of 40% or less. Hereinafter, a specific description will be given.

First, the haze refers to a percentage of transmission light beams that are deviated by 0.044 rad (2.5°) or more from incident light by forward scattering among transmission light beams passing through a test piece that is the molded article of the present embodiment.

In the present embodiment, the haze can be measured by any suitable conventionally known device. Examples of the device for measuring the haze include a device including a stable light source, a connection optical system, an integrating sphere with an opening, and a photometer. The photometer preferably includes a light receiver, a signal processing device, and a display device or a recorder.

For the measurement of the haze, a plurality of test pieces obtained by cutting out a molded article obtained by molding the methacrylic resin composition is used. The size of the test piece is not limited as long as it is large enough to cover an inlet opening and a compensation opening of an integrating sphere.

First, before the measurement of the haze, the test piece is conditioned for 15 minutes under conditions that a temperature is $(23 \pm 2)$°C and a relative humidity is $(50 \pm 10)$% accordance to ISO291.

Next, the device used for the measurement is, if necessary, disposed in an atmosphere maintained at a temperature of $(23 \pm 2)$°C and a relative humidity of $(50 \pm 10)$%, and thermal equilibrium is reached after a sufficient period of time before the measurement.

Next, the test piece is disposed in the device, a light flux of incident light beams that have passed through the test piece is observed, and the haze (%) is calculated by the following formula.

$$\text{Formula: Haze} = [(\tau 4/\tau 2) - \tau 3 \ (\tau 2/\tau 1)] \times 100$$

In the above formula,

$\tau 1$ represents a light flux of incident light beams,
$\tau 2$ represents a total light flux that has passed through the test piece,
$\tau 3$ represents a light flux diffused by the device, and
$\tau 4$ represents a light flux diffused by the device and the test piece.

(2) Evaluation of scratch resistance

Scratch resistance of the molded article of the present embodiment can be evaluated on the basis of a change in haze (refractive index) before and after a scratch resistance test.

(Scratch test)

In evaluating scratch resistance of the molded article, a scratch test is performed by rubbing a surface of the molded article using steel wool.

First, as described above, a molded article used in the test is allowed to stand at a high temperature and a reduced pressure to be brought into an absolute dry state.

Specifically, for example, the molded article can be brought into an absolute dry state by being allowed to stand in an oven having a temperature of 80°C while reducing the pressure to 85 mmHg to 90 mmHg using a vacuum pump.

Next, in order to bring the molded article in an absolute dry state into an equilibrium state, for example, the molded article is allowed to stand in an environment of a temperature of 80°C and a relative humidity of 35% for 13 days.

Note that here, an initial haze of the molded article before the scratch test is measured in advance according to JIS K7136 as described above.

Next, the scratch test is performed. Specifically, a surface of the molded article is scratched by pressing steel wool (count: #0000) with a load of 14 kPa against the surface of the molded article and rubbing the steel wool by 11 reciprocations at a speed of 15 cm/sec in a direction orthogonal to an extending direction of fibers constituting the steel wool.

Next, a haze of the molded article after the scratch test is measured according to JIS K7136 as described above.

(Calculation of $\Delta$haze)

On the basis of the values of haze of the molded article before and after the scratch test measured as described above, $\Delta$haze (unit: %), which is the amount of change in haze before and after the scratch test, is calculated.

Here, in the methacrylic resin composition of the present embodiment, when the content of the coated particles is a parts by mass with respect to 100 parts by mass of the content of the methacrylic resin, a value calculated by the following formula is defined as a $\Delta$haze threshold (unit: %).

$$\text{Formula: } -1.43 \times \ln(a) - 0.7$$

When the content of the coated particles in the methacrylic resin composition of the present embodiment is increased, a value of $\Delta$haze in the molded article is usually decreased. Therefore, the $\Delta$haze threshold is a value serving as a guide for more substantially evaluating scratch resistance of the molded article in consideration of the content of the coated particles.

In the present embodiment, when the value of $\Delta$haze is less than the $\Delta$haze threshold, it is evaluated that scratch resistance of the molded article is effectively improved even when the content of the coated particles is small.

More specifically, in the present embodiment, when $\Delta$haze/$\Delta$haze threshold is 1.00 or more, it is evaluated that "scratch resistance is not improved", when $\Delta$haze/$\Delta$haze threshold is less than 1.00, it is evaluated that "scratch resistance is improved", and when $\Delta$haze/$\Delta$haze threshold is 0.80 or less, it is evaluated that "scratch resistance is further improved".

Therefore, in the present embodiment, $\Delta$haze/$\Delta$haze threshold of the molded article is preferably less than 1.00, more preferably 0.80 or less, and still more preferably 0.71 or less.

In the present embodiment, the initial haze of the molded article is preferably less than 4%, more preferably 2.4% or less, and still more preferably 2.0% or less.

In addition, in the present embodiment, $\Delta$haze of the molded article is preferably 3.88% or less, more preferably 3.40% or less, and still more preferably 2.32% or less.

(3) Evaluation of water resistance

Water resistance of the molded article of the present embodiment can be evaluated on the basis of a change in haze before and after a water resistance test.

In the present embodiment, "water resistance of the molded article" refers to difficulty of "deterioration of haze of the molded article", that is, "deterioration of transparency of the molded article" over time due to contact with water (including moisture in air).

In the present specification, the haze of a molded article subjected to the water resistance test is described as "Haze$^x$".

Here, X represents the number of days during which a molded article in an absolute dry state is immersed in pure water at 80°C, and Haze$^0$ represents the haze of an initial molded article that is in an absolute dry state and is not to be immersed in pure water.

In the present embodiment, the water resistance test of a molded article can be performed by immersing a molded article in an absolute dry state in pure water at 80°C for X days to bring the molded article into a water absorption state, and then measuring the haze of the molded article in a water absorption state according to JIS K7136 as described above.

Usually, by immersing the methacrylic resin contained in the molded article in pure water at 80°C for seven days, a water absorption ratio (water absorption state) thereof reaches equilibrium. When the water absorption ratio of the methacrylic resin reaches equilibrium, the amount of moisture in the molded article increases, and thus the refractive index of the coated particles (inorganic particles) changes due to water absorption, and furthermore, a difference in refractive index between the methacrylic resin and the coated particles (inorganic particles) may also change.

Therefore, water resistance of the molded article is preferably evaluated by three indices of Haze$^0$ (initial haze when immersion in pure water is not performed), Haze$^7$ (haze after immersion in pure water is performed for seven days), and Haze$^{25}$ (haze after immersion in pure water is performed for 25 days)/Haze$^7$.

When both Haze$^0$ and Haze$^7$ are less than 4%, a difference in refractive index between the methacrylic resin and the coated particles (inorganic particles) contained in each of the molded article in an absolute dry state and the molded article in a water absorption state is small, and it can be said that transparency is high regardless of the amount of moisture in the molded article. Therefore, it can be evaluated that the molded article is excellent in water resistance. When $Haze^{25}/Haze^{7}$ is less than 3.2, it can be said that a change in refractive index of the coated particles (inorganic particles) over time due to water absorption is small, and therefore it can be evaluated that the molded article is excellent in water resistance.

Therefore, $Haze^{25}/Haze^{7}$ is preferably less than 3.2, more preferably 2.2 or less, and still more preferably 1.9 or less.

In the present embodiment, $Haze^{0}$ is preferably less than 4%, more preferably 1.4% or less, and still more preferably 1.1% or less.

Furthermore, $Haze^{7}$ is preferably less than 4%, more preferably 3.7% or less, and still more preferably 2.1% or less.

Furthermore, $Haze^{25}$ is preferably less than 4.2%, more preferably 4.0% or less, and still more preferably 3.3% or less.

4. Method for manufacturing molded article

Examples of a method for manufacturing the molded article of the present embodiment include a method in which the methacrylic resin composition described above is molded using any suitable conventionally known molding machine. The method for manufacturing the molded article of the present embodiment is not particularly limited. Examples of the method for manufacturing the molded article of the present embodiment include an extrusion molding method and an injection molding method.

As the method for manufacturing the molded article of the present embodiment, for example, it is preferable to use an injection molding method in which an injection molding machine is used as a molding machine, and a methacrylic resin composition is injected into a die of the molding machine and molded because a molded article having a complicated shape can be obtained.

Hereinafter, the method for manufacturing the molded article of the present embodiment will be described by exemplifying a manufacturing method using the injection molding method.

The method for manufacturing the molded article of the present embodiment includes: a step of preparing a methacrylic resin composition; and a step of injection-molding the prepared methacrylic resin composition to form a molded article. Hereinafter, each of the steps will be specifically described.

(1) Step of preparing methacrylic resin composition

This step is a step of preparing a methacrylic resin composition to be fed to an injection molding machine. Since the "methacrylic resin composition" is as described above, detailed description thereof is omitted.

In the present embodiment, in manufacturing a molded article by an injection molding method, the methacrylic resin composition is preferably in the pellet form described above from a viewpoint of further improving manufacturing efficiency. The shape, size, and the like of the pellet-shaped methacrylic resin composition can be set within any suitable range in consideration of an injection molding device to be used and conditions to be applied.

(2) Step of injection-molding methacrylic resin composition to form molded article

This step is a step of forming a methacrylic resin composition into a molded article with an injection molding machine.

Specifically, this step is performed by bringing a methacrylic resin composition into a molten state, injecting the molten methacrylic resin composition into a cavity of a die included in an injection molding machine to fill the methacrylic resin composition into the cavity and mold the methacrylic resin composition, then cooling the methacrylic resin composition, and then peeling off and taking out a molded article obtained by molding the methacrylic resin composition from the die.

More specifically, the molded article can be manufactured by inputting a pellet-shaped methacrylic resin composition into a cylinder from a hopper included in an injection molding machine, further melting the methacrylic resin composition while rotating a screw, then retracting the screw to fill a predetermined amount of the methacrylic resin composition into the cylinder, injecting the molten methacrylic resin composition into a cavity of a die at a predetermined injection temperature and a predetermined injection speed while applying pressure by advancing the screw to fill the methacrylic resin composition into the cavity, maintaining the pressure for a certain period of time until the die is sufficiently cooled, then opening the die, and peeling off and taking out a molded article from the die.

In the present embodiment, conditions for manufacturing the molded article can be appropriately set, and are not particularly limited. In the present embodiment, for example, a molded article having a desired shape can be manufactured by performing injection molding under conditions that a temperature in a cylinder of an injection molding machine is about 200°C to 270°C, a maintained pressure is about 80 MPa, a die temperature is about 60°C, and cooling time is about 45 seconds.

In the present embodiment, the temperature in the cylinder of the injection molding machine is preferably 200°C to 270°C, and more preferably 220°C to 260°C.

In the present embodiment, the maintained pressure (MPa) in the injection molding machine is preferably 10 MPa to 100 MPa, and more preferably 20 MPa to 90 MPa.

In the present embodiment, the die temperature (°C) of the injection molding machine is preferably 30°C to 80°C, and more preferably 50°C to 70°C.

In the present embodiment, the cooling time (seconds) is a time for cooling the molten methacrylic resin composition filled in the cavity in the die by maintaining the pressure with the die. The cooling time is preferably 20 to 150 seconds, and more preferably 30 to 60 seconds.

5. Application of molded article

The molded article of the present embodiment has high transparency and scratch resistance, and further has excellent water resistance, and thus can be suitably used as a lamp cover for a vehicle such as an automobile or a motorcycle.

Examples of the lamp cover for a vehicle include covers for a head lamp, a tail lamp, a stop lamp, a blinker, a fog lamp, a vehicle width lamp, and a reverse lamp.

EXAMPLES

Hereinafter, the present invention will be described more specifically with reference to Examples.

<Measurement of median diameter of inorganic particles>

A median diameter of inorganic particles (silica composite oxide particles and coated particles) was measured by a laser diffraction scattering method (unit: $\mu$m).

<Measurement of refractive index nD of inorganic particles>

A refractive index nD of the inorganic particles was measured by an immersion method using a light beam (sodium D ray) having a wavelength of 589.3 nm.

<Measurement of transparency of molded article>

For transparency of a molded article, a haze of the molded article was measured at 23°C according to JIS K7136 (unit: %).

Inorganic particles used in Examples and Comparative Examples are presented in Table 1 below.

[Table 1]

(Table 1)

| Inorganic particles | Silica composite oxide particles | Coating | Median diameter ($\mu$m) | Refractive index nD (-) |
|---|---|---|---|---|
| SiTi07488-S | Silica-titania | Coated (silica) | 0.75 | 1.488 |
| SiTi07485-S | Silica-titania | Coated (silica) | 0.77 | 1.485 |
| SiTi07483-S | Silica-titania | Coated (silica) | 0.76 | 1.483 |
| SiTi07488 | Silica-titania | Not coated | 0. 77 | 1.488 |
| SiTi07484 | Silica-titania | Not coated | 0.76 | 1.484 |

(continued)

| Inorganic particles | Silica composite oxide particles | Coating | Median diameter (μm) | Refractive index nD (-) |
|---|---|---|---|---|
| SiTi07482 | Silica-titania | Not coated | 0.76 | 1.482 |

<Manufacture of methacrylic resin A>

A mixture of 97.5 parts by mass of methyl methacrylate and 2.5 parts by mass of methyl acrylate, 0.016 parts by mass of 1,1-di(tert-butylperoxy) cyclohexane, and 0.16 parts by mass of n-octyl mercaptan were each continuously supplied to a polymerization reactor equipped with a stirrer, and a polymerization reaction was performed at 175°C for an average residence time of 43 minutes.

Next, a reaction liquid (partial polymer) that has flowed out of the polymerization reactor was preheated, and then supplied to a devolatilization extruder. Unreacted monomer components were vaporized and collected, and a pellet-shaped methacrylic resin A was obtained.

In the obtained methacrylic resin A, the content of a monomer unit derived from methyl methacrylate was 97.5% by mass, the content of a monomer unit derived from methyl acrylate was 2.5% by mass, and a melt flow rate (MFR) measured according to JIS K7210 (ISO 1133) was 2 g/10 min.

[Example 1]

<Manufacture of methacrylic resin composition (melt-kneading)>

The methacrylic resin A manufactured as described above and SiTi07488-S which is coated particles in an amount of 0.03 parts by mass with respect to 100 parts by mass of the methacrylic resin A were input and mixed as raw materials, then melt-kneaded under the following kneading conditions using a twin screw extruder (model: TEX30SS-30AW-2V, manufactured by The Japan Steel Works, Ltd.), extruded into a strand shape, cooled with water to be solidified, and cut with a strand cutter to obtain a pellet-shaped methacrylic resin composition. The inorganic particles (coated particles) and the addition amount thereof are presented in Table 2.

(Conditions of melt-kneading)

Regarding a temperature of the extruder, temperatures of eight heaters disposed apart from each other between the raw material input port and the outlet were set to 200°C, 200°C, 210°C, 220°C, 230°C, 240°C, 240°C, and 250°C from the raw material input port side, respectively. A screw rotation speed and a raw material input speed are as follows.

Screw rotation speed: 200 rpm
Raw material input rate: 14 kg/hr

<Manufacture of molded article (injection molding)>

Using an injection molding machine (EC130SXII-4A, manufactured by Toshiba Machine Co., Ltd.), the obtained pellet-shaped methacrylic resin composition was molded into a flat plate shape having a length of 150 mm × a width of 90 mm × a thickness of 3.0 mm under the following molding conditions to obtain a molded article.

(Conditions of injection molding)

Regarding a temperature in the cylinder, temperatures of five heaters disposed apart from each other between the raw material input port and the outlet were set to 60°C, 230°C, 240°C, 250°C, and 250°C from the raw material input port side, respectively. Other molding conditions are as follows.

Injection speed: 90 mm/sec
Maximum injection pressure: 200 MPa
Maintained pressure: 80 MPa
Die temperature: 60°C
Cooling time: 45 seconds

The obtained molded article was allowed to stand in an oven at 80°C for 16 hours, and then slowly cooled to 40°C over four hours, and scratch resistance was evaluated as follows.

(Evaluation of scratch resistance of molded article)

A scratch test was performed in which a surface of a molded article was rubbed using steel wool to be scratched.

First, a molded article used for the measurement was allowed to stand in an environment at a temperature of 80°C and a pressure of 100 mmHg or less to be brought into an absolute dry state. Specifically, the molded article was brought into an absolute dry state by allowing the molded article to stand in an oven having a temperature of 80°C while reducing the pressure to 100 mmHg or less, for example, about 85 mmHg to 90 mmHg using a vacuum pump.

Thereafter, the molded article was allowed to stand in an environment of a temperature of 80°C and a relative humidity of 35% for 13 days. Thereafter, a surface of the molded article was scratched by pressing #0000 steel wool with a load of 14 kPa against the surface of the molded article and rubbing the steel wool by 11 reciprocations at a speed of 15 cm/sec in a direction orthogonal to an extending direction of fibers of the steel wool.

As described above, values of haze of the molded article before and after the scratch test were measured according to JIS K7136, and the amount of change in haze before and after the scratch test (Δhaze (unit: %)) was calculated.

Here, "-1.43 × ln(a) - 0.7" when the content of the coated particles is a parts by mass with respect to 100 parts by mass of the methacrylic resin is defined as a Δhaze threshold (unit: %).

Δhaze lower than the Δhaze threshold means that scratch resistance of the molded article is efficiently improved even when a small amount of coated particles is added.

Therefore, when Δhaze/Δhaze threshold was 1.00 or more, it was evaluated that "scratch resistance was not improved (×: unacceptable)", when Δhaze/Δhaze threshold was less than 1.00, it was evaluated that "scratch resistance was improved (o: good)", and when Δhaze/Δhaze threshold was 0.80 or less, it was evaluated that "scratch resistance was further improved (⊙: excellent)". Note that when Δhaze was 10% or more, scratch resistance was significantly poor, and thus it was judged as (×: unacceptable) regardless of the Δhaze threshold. Results thereof are presented in Table 2.

[Examples 2 to 10]

A molded article was manufactured in a similar manner to Example 1 except that the inorganic particles (coated particles) and the addition amount thereof were changed as presented in Table 2, and scratch resistance was evaluated. Results thereof are presented in Table 2 below.

[Comparative Examples 1 to 9]

A molded article was manufactured in a similar manner to Example 1 except that the inorganic particles (silica composite oxide particles) and the addition amount thereof were changed as presented in Table 2, and scratch resistance was evaluated. Results thereof are presented in Table 2 below.

[Comparative Example 10]

A molded article was manufactured in a similar manner to Example 1 except that inorganic particles were not added, and scratch resistance was evaluated. Results thereof are presented in Table 2 below.

[Table 2]

(Table 2)

| | Inorganic particles | Addition amount of inorganic particles (parts by mass) | Initial haze (%) | ΔHaze (%) | ΔHaze threshold (%) | ΔHaze/ΔHaze threshold (-) | Scratch resistance |
|---|---|---|---|---|---|---|---|
| Example 1 | SiTi07488-S | 0.03 | 0.4 | 3.05 | 4.31 | 0.71 | ⊙ |
| Example 2 | SiTi07488-S | 0.1 | 0.4 | 2.32 | 2.59 | 0.89 | ○ |

(continued)

| | Inorganic particles | Addition amount of inorganic particles (parts by mass) | Initial haze (%) | ΔHaze (%) | ΔHaze threshold (%) | ΔHaze/ΔHaze threshold (-) | Scratch resistance |
|---|---|---|---|---|---|---|---|
| Example 3 | SiTi07488-S | 0.3 | 0.6 | 0.82 | 1. 02 | 0.80 | ⊙ |
| Example 4 | SiTi07485-S | 0.03 | 0.5 | 3.88 | 4.31 | 0.90 | ○ |
| Example 5 | SiTi07485-S | 0.1 | 1.1 | 1.70 | 2.59 | 0.66 | ⊙ |
| Example 6 | SiTi07485-S | 0.3 | 1.7 | 0.98 | 1. 02 | 0.96 | ○ |
| Example 7 | SiTi07483-S | 0.03 | 0.5 | 3.40 | 4.31 | 0.79 | ⊙ |
| Example 8 | SiTi07483-S | 0.1 | 1.0 | 1.20 | 2.59 | 0.46 | ⊙ |
| Example 9 | SiTi07483-S | 0.3 | 2.0 | 0.40 | 1. 02 | 0.39 | ⊙ |
| Example 10 | SiTi07483-S | 0.45 | 2.4 | 0.30 | 0.44 | 0.68 | ⊙ |
| Comparative Example 1 | SiTi07488 | 0.03 | 0.3 | 5.65 | 4.31 | 1.31 | × |
| Comparative Example 2 | SiTi07488 | 0.1 | 0.5 | 2.77 | 2.59 | 1.07 | × |
| Comparative Example 3 | SiTi07488 | 0.3 | 0. 8 | 1. 32 | 1. 02 | 1.29 | × |
| Comparative Example 4 | SiTi07484 | 0.03 | 0.3 | 5.58 | 4.31 | 1.29 | × |
| Comparative Example 5 | SiTi07484 | 0.1 | 0.5 | 4.38 | 2.59 | 1.69 | × |
| Comparative Example 6 | SiTi07484 | 0.3 | 1.1 | 1.22 | 1. 02 | 1.19 | × |
| Comparative Example 7 | SiTi07482 | 0.03 | 0.4 | 4.75 | 4.31 | 1.10 | × |
| Comparative Example 8 | SiTi07482 | 0.1 | 0. 6 | 2.90 | 2.59 | 1.12 | × |
| Comparative Example 9 | SiTi07482 | 0.3 | 1.7 | 1. 03 | 1. 02 | 1.01 | × |
| Comparative Example 10 | - | - | 0.2 | 19.45 | - | - | × |

The molded articles of Examples 1 to 10 and Comparative Examples 3, 6, 9 and 10 were evaluated for water resistance as follows.

(Evaluation of water resistance of molded article)

First, a flat plate-shaped molded article was prepared by cutting each of the molded articles into a strip shape having a width of 75 mm, a length of 90 mm, and a thickness of 3 mm.

Next, the obtained molded article was dried until it was brought into an absolute dry state. Specifically, the molded article was allowed to stand in an oven at a temperature of 80°C while reducing the pressure to 100 mmHg or less using a vacuum pump, and dried for 24 days while observing a change in weight of the molded article, thereby being brought into an absolutely dry state. Here, a change in weight of each of the molded articles from the 19th day to the 24th day (120 hours) was less than 0.05%, and the amount of change in haze was less than 5%. Therefore, it was determined that the molded articles reached an "absolutely dry state" on the 24th day.

The molded article in an absolute dry state was immersed in pure water at 80°C for seven days or 25 days to be brought into a water absorption state, and then a water resistance test for measuring a haze at 23°C was performed according to JIS K7136 (unit: %).

Water resistance of the molded article was evaluated by three indices of $Haze^0$ (initial haze when immersion in pure water is not performed), $Haze^7$ (haze after immersion in pure water is performed for seven days), and $Haze^{25}$ (haze after immersion in pure water is performed for 25 days)/$Haze^7$. Results thereof are presented in Table 3 below.

[Table 3]

(Table 3)

| | Inorganic particles | Addition amount of inorganic particles (parts by mass) | $Haze^0$ | $Haze^7$ | $Haze^{25}$ | $Haze^{25}/Haze^7$ |
|---|---|---|---|---|---|---|
| Example 1 | SiTi07488-S | 0.03 | 0.3 | 0.6 | 1.0 | 1.7 |
| Example 2 | SiTi07488-S | 0.1 | 0.3 | 1.3 | 2.0 | 1.5 |
| Example 3 | SiTi07488-S | 0.3 | 0. 8 | 3.7 | 4.2 | 1.1 |
| Example 4 | SiTi07485-S | 0.03 | 0.3 | 0.5 | 1.4 | 2.8 |
| Example 5 | SiTi07485-S | 0.1 | 0.5 | 0.9 | 2.7 | 3.0 |
| Example 6 | SiTi07485-S | 0.3 | 1.1 | 2.1 | 4.0 | 1.9 |
| Example 7 | SiTi07483-S | 0.03 | 0.4 | 0.4 | 1.0 | 2.5 |
| Example 8 | SiTi07483-S | 0.1 | 0n 8 | 0.7 | 1.9 | 2.7 |
| Example 9 | SiTi07483-S | 0.3 | 1.4 | 1.5 | 3.3 | 2.2 |
| Example 10 | SiTi07483-S | 0.45 | 2.7 | 1.5 | 3. 0 | 2.0 |
| Comparative Example 3 | SiTi07488 | 0.3 | 0.7 | 2.5 | 8.5 | 3.4 |
| Comparative Example 6 | SiTi07484 | 0.3 | 1.3 | 1.7 | 9.5 | 5.6 |
| Comparative Example 9 | SiTi07482 | 0.3 | 1.8 | 1.8 | 10.6 | 5.9 |
| Comparative Example 10 | - | 0 | 0.3 | 0.5 | 1.3 | 2.6 |

## Claims

1.  A methacrylic resin composition comprising:

    a methacrylic resin; and
    coated particles in which silica composite oxide particles are coated with silica, wherein
    a molded article having a width of 75 mm, a length of 90 mm, and a thickness of 3 mm, obtained by molding the methacrylic resin composition satisfies the following formulae (1) to (3):

    $$Haze^0 < 4 \quad (1),$$

    $$Haze^7 < 4 \quad (2),$$

    and

    $$Haze^{25}/Haze^7 < 3.2 \quad (3)$$

    (In the formulae (1) to (3),
    $Haze^0$ represents a haze (%) when the molded article is brought into an absolute dry state,
    $Haze^7$ represents a haze (%) after the molded article is brought into an absolute dry state and then immersed in pure water at 80°C for seven days, and

Haze[25] represents a haze (%) after the molded article is brought into an absolute dry state and then immersed in pure water at 80°C for 25 days.), wherein the haze of the molded article is measured at 23°C according to JIS K7136.

2. The methacrylic resin composition according to claim 1, wherein the silica composite oxide is a silica-titania composite oxide.

3. The methacrylic resin composition according to claim 1 or 2, wherein the coated particles have a median diameter of 0.4 $\mu$m to 2.0 $\mu$m, as measured by a laser diffraction scattering method.

4. The methacrylic resin composition according to any one of claims 1 to 3, wherein the coated particles have a refractive index of 1.474 to 1.494, as measured by an immersion method using a light beam (sodium D ray) having a wavelength of 589.3 nm at 25°C.

5. The methacrylic resin composition according to any one of claims 1 to 4, wherein a content of the coated particles is 0.001 parts by mass to 5 parts by mass with respect to 100 parts by mass of the methacrylic resin.

6. The methacrylic resin composition according to claim 5, wherein a content of the coated particles is 0.06 parts by mass to 0.6 parts by mass with respect to 100 parts by mass of the methacrylic resin.

7. The methacrylic resin composition according to any one of claims 1 to 6, wherein the methacrylic resin contains 85% by mass or more of monomer units derived from methyl methacrylate.

8. A molded article comprising the methacrylic resin composition according to any one of claims 1 to 7.


**Patentansprüche**

1. Methacrylharzzusammensetzung umfassend:

ein Methacrylharz; und
beschichtete Partikel, wobei Siliciumdioxid-Verbundwerkstoffoxidpartikel mit Siliciumdioxid beschichtet werden, wobei
ein geformter Artikel, der eine Breite von 75 mm, eine Länge von 90 mm und eine Dicke von 3 mm aufweist und durch Formen der Methacrylharzzusammensetzung erhalten wird, den folgenden Formeln (1) bis (3) entspricht:

$$\text{Trübung}^0 < 4 \ (1),$$

$$\text{Trübung}^7 < 4 \ (2)$$

und

$$\text{Trübung}^{25}/\text{Trübung}^7 < 3{,}2 \ (3)$$

(in den Formeln (1) bis (3),
Trübung[0] eine Trübung (%) darstellt, wenn der geformte Artikel in einen absolut trockenen Zustand gebracht wird,
Trübung[7] eine Trübung (%) darstellt, nachdem der geformte Artikel in einen absolut trockenen Zustand gebracht und dann in reines Wasser bei 80 °C sieben Tage lang gebracht wird und
Trübung[25] eine Trübung (%) darstellt, nachdem der geformte Artikel in einen absolut trockenen Zustand gebracht und dann in reines Wasser bei 80 °C 25 Tage lang gebracht wird), wobei die Trübung des formten Artikels bei 23 °C JIS K7136 entsprechend gemessen wird.

2. Methacrylharzzusammensetzung nach Anspruch 1, wobei das Siliciumdioxid-Verbundwerkstoffoxid ein Siliciumdioxid- Titandioxid- Verbundwerkstoffoxid ist.

**3.** Methacrylharzzusammensetzung nach Anspruch 1 oder 2, wobei die beschichteten Partikel einen mittleren Durchmesser von 0,4 $\mu$m bis 2,0 $\mu$m, wie durch ein Laserbeugungsstreuungsverfahren gemessen, aufweisen.

**4.** Methacrylharzzusammensetzung nach einem der Ansprüche 1 bis 3, wobei die beschichteten Partikel einen Brechungsindex von 1,474 bis 1,494 aufweisen, wie durch ein Tauchverfahren unter Anwendung eines Lichtstrahls (Natrium D-Strahl) gemessen, der eine Wellenlänge von 589,3 nm bei 25 °C aufweist.

**5.** Methacrylharzzusammensetzung nach einem der Ansprüche 1 bis 4, wobei ein Gehalt der beschichteten Partikel 0,001 Masseteile bis 5 Masseteile mit Bezug auf 100 Masseteile des Methacrylharzes beträgt.

**6.** Methacrylharzzusammensetzung nach Anspruch 5, wobei ein Gehalt der beschichteten Partikel 0,06 Masseteile bis 0,6 Masseteile mit Bezug auf 100 Masseteile des Methacrylharzes beträgt.

**7.** Methacrylharzzusammensetzung nach einem der Ansprüche 1 bis 6, wobei das Methacrylharz 85 Masse-% oder mehr Monomereinheiten, die von Methylmethacrylat abgeleitet sind, enthält.

**8.** Geformter Artikel umfassend die Methacrylharzzusammensetzung nach einem der Ansprüche 1 bis 7.

**Revendications**

**1.** Composition de résine méthacrylique comprenant :

une résine méthacrylique, et
des particules enrobées, dans laquelle des particules d'oxyde composite à base de silice sont enrobées avec de la silice, dans laquelle
un article moulé ayant une largeur de 75 mm, une longueur de 90 mm, et une épaisseur de 3 mm, obtenu par moulage de la composition de résine méthacrylique, satisfait aux formules (1) à (3) suivantes :

$$\text{Turbidité}^0 < 4 \ (1),$$

$$\text{Turbidité}^7 < 4 \ (2),$$

et

$$\text{Turbidité}^{25}/\text{Turbidité}^7 < 3,2 \ (3),$$

(Dans les formules (1) à (3),
$\text{Turbidité}^0$ représente une turbidité (en %) lorsque l'article moulé est amené dans un état sec absolu,
$\text{Turbidité}^7$ représente une turbidité (en %) après que l'article moulé est amené dans un état sec absolu, puis est immergé dans de l'eau pure à 80 °C pendant sept jours, et
$\text{Turbidité}^{25}$ représente une turbidité (en %) après que l'article moulé est amené dans un état sec absolu, puis est immergé dans de l'eau pure à 80 °C pendant 25 jours.), dans lequel la turbidité de l'article moulé est mesurée à 23 °C selon la norme JIS K7136.

**2.** Composition de résine méthacrylique selon la revendication 1, dans laquelle l'oxyde composite à base de silice est un oxyde composite de silice-dioxyde de titane.

**3.** Composition de résine méthacrylique selon la revendication 1 ou 2, dans laquelle les particules enrobées ont un diamètre moyen de 0,4 $\mu$m à 2,0 $\mu$m, tel que mesuré par une méthode de diffusion par diffraction laser.

**4.** Composition de résine méthacrylique selon l'une quelconque des revendications 1 à 3, dans laquelle les particules enrobées présentent un indice de réfraction de 1,474 à 1,494, tel que mesuré par un procédé d'immersion en utilisant un faisceau de lumière (raie D du sodium) ayant une longueur d'onde de 589,3 nm à 25 °C.

**5.** Composition de résine méthacrylique selon l'une quelconque des revendications 1 à 4, dans laquelle une proportion des particules enrobées est de 0,001 parties en masse à 5 parties en masse rapportée à 100 % en masse de la résine méthacrylique.

6. Composition de résine méthacrylique selon la revendication 5, dans laquelle une proportion des particules enrobées est de 0,06 parties en masse à 0,6 parties en masse rapportée à 100 % en masse de la résine méthacrylique.

7. Composition de résine méthacrylique selon l'une quelconque des revendications 1 à 6, dans laquelle la résine méthacrylique contient 85 % en masse ou plus d'unités monomères dérivées de méthacrylate de méthyle.

8. Article moulé comprenant la composition de résine méthacrylique selon l'une quelconque des revendications 1 à 7.

**REFERENCES CITED IN THE DESCRIPTION**

**Patent documents cited in the description**

- WO 2020022339 A

- WO 2020022341 A